# EUROPEAN PATENT APPLICATION

(11) **EP 1 961 934 A2**
(43) Date of publication of application: **27.08.2008**
(21) Application number: 07024812.5
(22) Date of filing: 20.12.2007
(51) Int. Cl.: F02B 23/10, F02M 61/18, F02D 41/04

(54) **Direct injection internal combustion engine and injector used for direct injection internal combustion engine**

(30) Priority: 20.02.2007 JP 2007038754
(71) Applicant: Hitachi, Ltd., Chiyoda-ku Tokyo 100-8280 (JP)
(72) Inventor: Kihara, Yusuke, 6-1, Marunouchi 1-chome Chiyoda-ku Tokyo 100-8220 (JP); Shiraishi, Takuya, 6-1, Marunouchi 1-chome Chiyoda-ku Tokyo 100-8220 (JP); Tsuchita, Kenji, 6-1, Marunouchi 1-chome Chiyoda-ku Tokyo 100-8220 (JP); Natsui, Hiroyuki, 6-1, Marunouchi 1-chome Chiyoda-ku Tokyo 100-8220 (JP); Fujii, Hiroshi, 6-1, Marunouchi 1-chome Chiyoda-ku Tokyo 100-8220 (JP); Sekine, Atsushi, 6-1, Marunouchi 1-chome Chiyoda-ku Tokyo 100-8220 (JP)
(74) Representative: Beetz & Partner

(57) **Abstract**

It is necessary to attain the combustion stability when performing ignition retarding in order to reduce exhaust gas and raise the exhaust gas temperature under a cold start condition, as well as soot reduction under a fully open throttle valve (23) condition.
An injector (9) according to the present invention comprises: a plurality of fuel passages (11a-11F,13a-13F,38a-38H,40a-40H) having an axis line inclined with respect to a valve operation axis line (9A) at a nozzle end; wherein inclined axis lines of at least three of the fuel passages have a spreading angle, none of them intersecting with each other, and three injection points (10f,10e,10a) are formed in a plane perpendicular to a valve operation axis line (9A) to form a triangle (100); and wherein at least one center-oriented fuel passage having an injection point (10B) around the center of the triangle (100) is provided.

## Description

### BACKGROUND OF THE INVENTION

### 1. Field of the Invention

The present invention relates to an engine with direct fuel injection into the cylinder (hereinafter referred to as combustion chamber), so-called a direct injection internal combustion engine (hereinafter referred to as engine), which is provided with an injector having a plurality of fuel injection nozzles (hereinafter referred to as injector).

### 2. Description of the Related Art

JP-A-8-312352 discloses a technique of attaining efficient premixed combustion in a direct injection engine which is provided with an injector having a plurality of nozzles (hereinafter referred to as multi-hole injector). With the technique, at least one fuel spray is oriented toward the upper direction than the injector and at least one of the remaining fuel sprays toward the piston to form a homogeneous air-fuel mixture.

Further, JP-A-2005-98120 discloses a technique of improving the fuel efficiency by orienting a plurality of fuel sprays in such a way to surround the electrode of the ignition plug to perform lean combustion as well as homogenizing the air-fuel mixture by setting the fuel injection timing to a middle of the suction stroke at the time of uniform combustion. Further, JP-A-2005-98118 discloses a technique of improving ignition characteristics at a cold start of an engine by orienting a plurality of fuel sprays in such a way to surround the electrode of the ignition plug.

When an engine is started up in a cold state, exhaust gas is discharged from the engine as it is because of inactive catalyst, which will largely affect the environment. Conventionally, fuel is injected during the suction stroke to form a homogeneous air-fuel mixture in the cylinder, and the ignition timing is delayed insofar as stable combustion is made to raise the exhaust gas temperature, thus attaining unburnt fuel reduction and early activating catalyst. However, in response to a demand for further reducing exhaust gas, a method of remarkably delaying the ignition timing is presently being studied. With this method, fuel is injected once or several times within a range from the last stage of the compression stroke to the first stage of the expansion stroke to stratify the fuel in the vicinity of the ignition plug. Since the exhaust gas temperature rises, oxidation reaction progresses not only in the combustion chamber but also in the exhaust pipe, allowing remarkable unburnt fuel reduction and early activation of catalyst.

### SUMMARY OF THE INVENTION

However, at the time of high load operation during which the throttle valve is fully open, it is necessary to sufficiently evaporate the injected fuel to form a homogeneous air-fuel mixture in order to obtain high power. However, if much fuel is oriented toward the ignition plug, fuel sprays of the injector adhere to the surface of the opposing wall degrading fuel evaporation. Accordingly, a problem of power reduction arises.

An object of the present invention is to attain early rise of the exhaust gas temperature by ignition retarding at a cold start of the engine, as well as maintenance of high power at a high load operation during which all the throttle valves are fully opened.

Further, specific subjects will become apparent in the explanations of the following embodiments.

The above-mentioned object of the present invention is attained by a direct injection internal combustion engine which injects fuel directly into the combustion chamber by use of an injector which injects a first fuel spray oriented toward the ignition plug, a second fuel spray oriented toward both side sections of the piston, and/or a third fuel spray oriented toward a space defined by the plurality of fuel sprays.

In accordance with the configuration of the present invention, preferably, a fuel passage for leading fuel to each fuel nozzle hole forming the first, second, and/or third fuel sprays has at least two different diameters, and a maximum diameter of the different fuel passage diameters is up to 1.5 times a minimum diameter thereof.

Preferably, the injector used for the direct injection internal combustion engine comprises: a plurality of fuel passages having an axis line inclined with respect to a valve operation axis line at the end of the nozzle; wherein inclined axis lines of at least three of the fuel passages have a spreading angle, none of them intersecting with each other, and/or three injection points are formed in a plane perpendicular to a valve operation axis line to form a triangle; and wherein at least one center-oriented fuel passage having an injection point around the center of the triangle is provided.

Further, with the direct injection internal combustion engine, preferably, the fuel injection timing is set to 30 degrees before the compression T.D.C. or later at a cold start of the engine and controlled so as to be around 90 degrees after the suction T.D.C. after the engine has warmed up.

Further, preferably, fuel sprays from the injector comprises: one or a plurality of upper fuel sprays injected toward below the ignition plug provided on the cylinder head; and a plurality of lower fuel sprays injected toward the periphery surface of the combustion chamber or the top surface of the piston; wherein, when fuel injection is performed with a constant fuel pressure at a constant fuel injection timing, the fuel injection quantity of the upper fuel spray is constant regardless of the actual air volume displacement of the engine, and the fuel injection quantity of the lower fuel sprays is proportional to the actual air volume displacement of the engine.

In accordance with the present invention, combustion has been improved by providing another fuel spray oriented toward the center of the injection points arranged in the shape of a triangle.

More specific effects will become apparent in the explanations of the following embodiments.

### BRIEF DESCRIPTION OF THE DRAWINGS

Fig. 1 is a diagram showing a configuration of a first embodiment.
Fig. 2 is a diagram showing an external appearance of fuel sprays according to the first embodiment.
Fig. 3 is a diagram showing a horizontal cross section of fuel sprays according to the first embodiment.
Fig. 4 is a diagram showing an injector nozzle according to the first embodiment.
Fig. 5 is a diagram showing an injector nozzle according to the first embodiment.
Fig. 6 is a diagram showing an injector nozzle according to a second embodiment.
Fig. 7 is a diagram showing a horizontal cross section of fuel sprays according to the second embodiment.
Fig. 8 is a diagram showing a configuration of the second embodiment.
Fig. 9 is a diagram showing an injector nozzle according to a third embodiment.
Fig. 10 is a diagram showing a horizontal cross section of fuel sprays according to the third embodiment.
Fig. 11 is a diagram showing a configuration of the third embodiment.
Fig. 12 is a diagram showing an injector nozzle according to a fourth embodiment.
Fig. 13 is a diagram showing a horizontal cross section of fuel sprays according to the fourth embodiment.
Fig. 14 is a diagram showing a configuration of the fourth embodiment.
Fig. 15 is a graph showing the correlation between flow rate of a cylinder head side fuel spray and indicated mean effective pressure.
Fig. 16 is a graph showing the correlation between flow rate of the cylinder head side fuel spray and soot emission.
Fig. 17 is a graph showing the correlation between nozzle hole diameter ratio and soot emission.
Fig. 18 is a graph showing the correlation between nozzle hole diameter ratio, exhaust gas, and deposit.
Fig. 19 is a diagram showing a configuration of the first embodiment.
Fig. 20 is a diagram showing a situation at a cold start of an engine according to the first embodiment.
Fig. 21 is a diagram showing an injector nozzle according to a fifth embodiment.
Fig. 22 is a diagram showing a horizontal cross section of fuel sprays according to the fifth embodiment.
Fig. 23 is a diagram showing a configuration of the fifth embodiment.

### DETAILED DESCRIPTION OF THE PREFERRED EMBODIMENTS

The following describes subjects to be solved with the present embodiments.

When ignition retarding is to be performed by use of a multi-hole injector, it is possible to use a method of orienting the fuel in the vicinity of the ignition plug and distributing an air-fuel mixture at the time of ignition as disclosed in JP-A-2005-98118. With such a configuration, if the actual air volume displacement increases by air volume displacement or supercharging, a method of increasing the flow rate per unit time of the injector according to the actual air volume displacement is used in order not to change the fuel injection timing. However, if the flow rate of each nozzle hole is not to be changed by the flow rate per unit time, the fuel injection quantity toward the ignition plug, i.e., cylinder head side will increase. However, because of a short distance from the fuel spray point to the cylinder head side, if the fuel injection quantity of a cylinder head side fuel spray is increased more than necessary, the amount of fuel adhesion to the wall surface increases resulting in exhaust gas degradation.

The present embodiment provides a direct injection engine comprising an injector having a plurality of nozzle holes and a control unit for the direct injection engine. The injector reduces the amount of fuel adhesion to the cylinder head wall surface in engines having different actual air volume displacements to restrain exhaust gas degradation.

In order to attain the present object, the present embodiments are configured as follows.

A first specific configuration comprises: an injector having a plurality of nozzle holes provided on a side surface of the combustion chamber; an ignition plug at the center top of the combustion chamber; and fuel sprays from the injector including one or a plurality of cylinder head side fuel sprays targeting the cylinder head side for fuel injection toward the cylinder head side and a plurality of cylinder block side fuel sprays for fuel injection toward the cylinder block side; wherein fuel injection is performed at least once during the compression stroke at a cold start of an engine; wherein the fuel injection quantity of the cylinder head side fuel spray is constant even with different actual air volume displacements as the fuel injection quantity when fuel injection is performed with a constant fuel pressure at a constant fuel injection timing; and wherein the fuel injection quantity of cylinder block side fuel sprays is proportional to different actual air volume displacements.

A second specific configuration is based on the first specific configuration except that the fuel injection start timing during the compression stroke is between 70 degrees B.T.D.C. and the T.D.C.

A third specific configuration is based on the first specific configuration except that, when the fuel injection quantity of cylinder block side fuel sprays changes in proportion to the actual air volume displacement, the cylinder block side fuel sprays are injected from the same number of nozzle holes with different diameters.

A fourth specific configuration is based on the first specific configuration except that, when the fuel injection quantity of cylinder block side fuel sprays changes in proportion to the actual air volume displacement, the cylinder block side fuel sprays are injected from a different number of nozzle holes with substantially the same diameter.

A fifth specific configuration is based on the first specific configuration except that, when the fuel injection quantity of cylinder block side fuel sprays changes in proportion to the actual air volume displacement, the cylinder block side fuel sprays are injected from a different number of nozzle holes with different diameters, and a maximum diameter of the nozzle holes is up to 1.5 times a minimum diameter thereof.

A sixth specific configuration comprises: an injector having a plurality of nozzle holes provided on a side surface of the combustion chamber; an ignition plug at the center top of the combustion chamber; and fuel sprays from the injector including one or a plurality of cylinder head side fuel sprays targeting the cylinder head side for fuel injection toward the cylinder head side and a plurality of cylinder block side fuel sprays for fuel injection toward the cylinder block side; wherein fuel injection is performed at least once during the compression stroke at a cold start of the engine; and wherein, when the flow rate per unit time is measured under a 7MPa fuel pressure condition, the fuel flow rate of the cylinder head side fuel spray is between a lower-limit value of 45 cc/min and an upper-limit value of 87 cc/min when the bore diameter of the engine is 80mm.

A seventh specific configuration is based on the sixth specific configuration except that the lower-limit value of the fuel flow rate of the cylinder head side fuel spray equals bore diameter/80*45 cc/min and the upper-limit value equals bore diameter/80*87 cc/min.

The following embodiments comprise: an injector having a plurality of nozzle holes provided on a side surface of the combustion chamber; an ignition plug at the center top of the combustion chamber; and fuel sprays from the injector including one or a plurality of cylinder head side fuel sprays targeting the cylinder head side for fuel injection toward the cylinder head side and a plurality of cylinder block side fuel sprays for fuel injection toward the cylinder block side; wherein fuel injection is performed at least once during the compression stroke at a cold start of the engine; wherein a high-pressure fuel feed pump which can be used under a 15MPa fuel pressure is provided; wherein an injector having a plurality of nozzle holes with different hole diameters is provided, and a maximum diameter of the nozzle holes is up to 1.5 times a minimum diameter thereof. First Embodiment

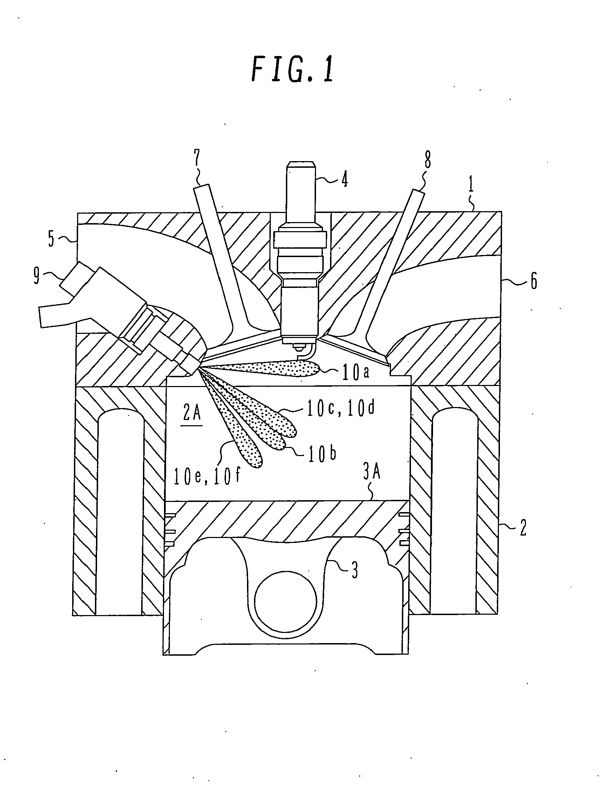

A configuration of a direct injection engine according to a first embodiment is schematically shown in Fig. 1.

A combustion chamber 2A is composed of a cylinder head 1, a cylinder block 2, and a piston 3 inserted into the cylinder block 2. An ignition plug 4 is provided at the center top of the combustion chamber 2A. A suction pipe 5 and an exhaust pipe 6 open into the combustion chamber 2A, which are provided with a suction valve 7 and an exhaust valve 8, respectively, to open and close each opening. An injector 9 is provided on the suction side in the combustion chamber 2A so as to inject fuel directly into the combustion chamber 2A, and fuel sprays 10a to 10f are injected.

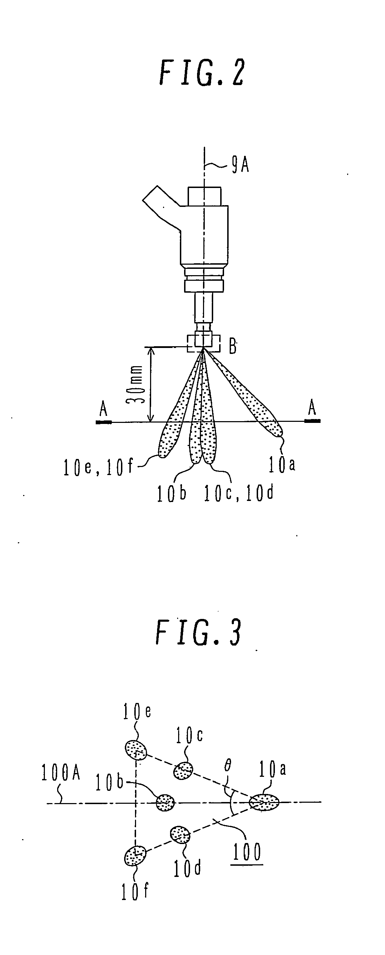

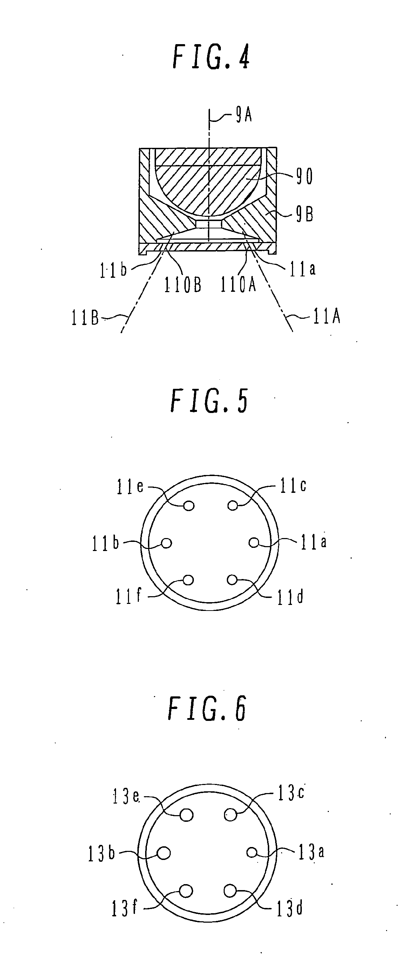

The shapes of fuel sprays injected from the injector 9 used by the first embodiment are shown in Figs. 2 and 3, and a nozzle in an enlarged manner in Fig. 4. Figs. 2 and 3 show external shapes of fuel sprays injected into a free space having an atmospheric pressure equalized to the barometric pressure under an 11MPa fuel pressure condition. Fig. 2 shows the shapes of fuel sprays when the injector is viewed from the side. Fig. 3 shows the shapes of fuel sprays taken along the AA line at 30mm below the nozzle holes at 1ms after fuel injection. Nozzle holes 11 are circumferentially provided at the end of the injector 9. A fuel spray 10a is formed from a nozzle hole 11a; a fuel spray 10b from a nozzle hole 11b; and fuel sprays 10c to 10f from nozzle holes 11c to 11f. The injector 9 is located so that the fuel spray 10a is on the side of the ignition plug 4.

The fuel spray 10a is injected toward the cylinder head 1 and therefore referred to as cylinder head side fuel spray. The fuel sprays 10b to 10f are injected toward the cylinder block 2 and therefore referred to as cylinder block side fuel sprays.

Here, a method of confirming the shapes of the fuel sprays as shown in Fig. 2 will be explained below. Although it is desirable that the fuel to be injected is the gasoline to actually be injected in the engine, it may be possible to use a fluid having the same characteristics as the gasoline. The pressure of the present fuel is increased to 11MPa and then injected into a container having an atmospheric pressure equalized to the barometric pressure. It is necessary that the container be provided with a window which allows input of sheet light and a window which allows shooting of fuel sprays using a high-speed camera, the windows having a thickness of about 5mm. With an injection pulse duration from the start to end of fuel injection to 1ms, a drive pulse signal is given to the injector to perform fuel injection. Then, it is preferable to take a photograph of fuel sprays at 1ms after fuel injection in synchronization with the driving pulse signal. Any types of light sources can be used insofar as the shapes of fuel sprays can be recognized.

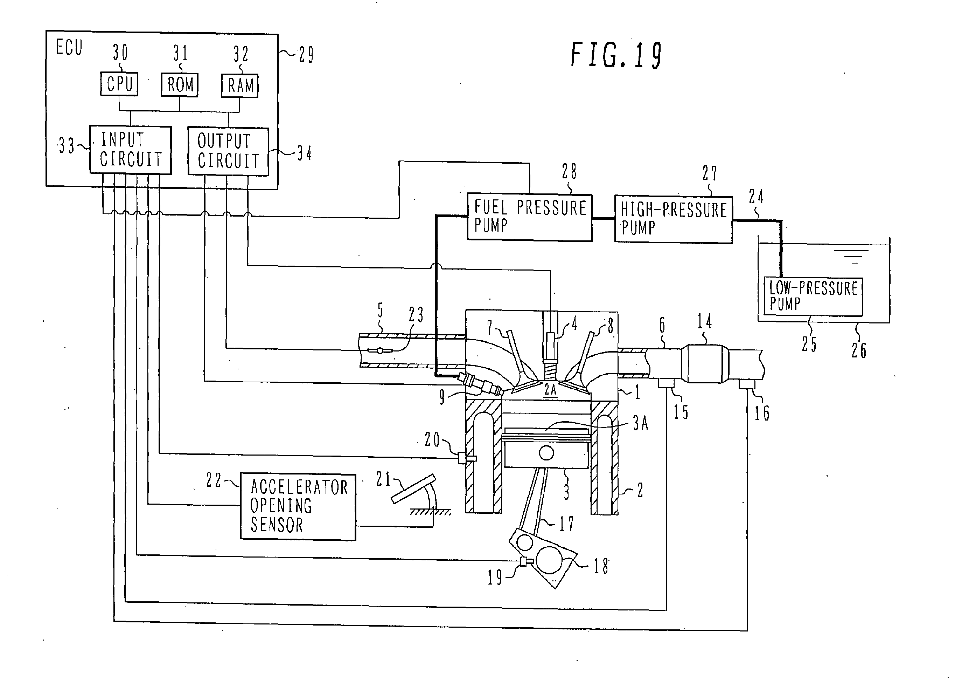

Fig. 19 is a block diagram showing an overall configuration of the engine. The piston 3 is connected with a crankshaft 18 through a conrod 17, the crankshaft 18 being provided with a crank angle sensor 19 which can detect a crank angle and an engine rotational speed. The cylinder block 2 is provided with a water temperature sensor 20 which detects a cooling water temperature. An accelerator 21 is provided with an accelerator opening sensor 22 which detects the depressed amount of the accelerator by the driver. The suction pipe 5 is provided with a throttle valve 23 which can control the quantity of intake air. An air flow sensor (not shown) which can detect the quantity of intake air is provided on an upstream side of the suction pipe 5. The exhaust pipe 6 is provided with a three-way catalyst 14, an air-fuel ratio sensor 15 provided on an upstream side thereof, and an O₂ sensor 16 on a downstream side thereof. A low-pressure pump 26 provided in a fuel tank 25 is connected to the injector 9 through a fuel pipe 24, and a high-pressure pump 27 which further pressurizes the fuel and a fuel pressure sensor 28 which can detect the fuel pressure are provided in the middle of the fuel pipe 24.

The electronic control unit (ECU) 29 is composed of a central processing unit (CPU) 30 which performs calculation processing according a set program, a read-only memory (ROM) 31 which stores a control program and data necessary for calculations, a random access memory (RAM) 32 which temporarily stores a calculation result, an input circuit 33 which receives signals from each sensor, and an output circuit 34 which transmits signals to each apparatus based on the calculation result.

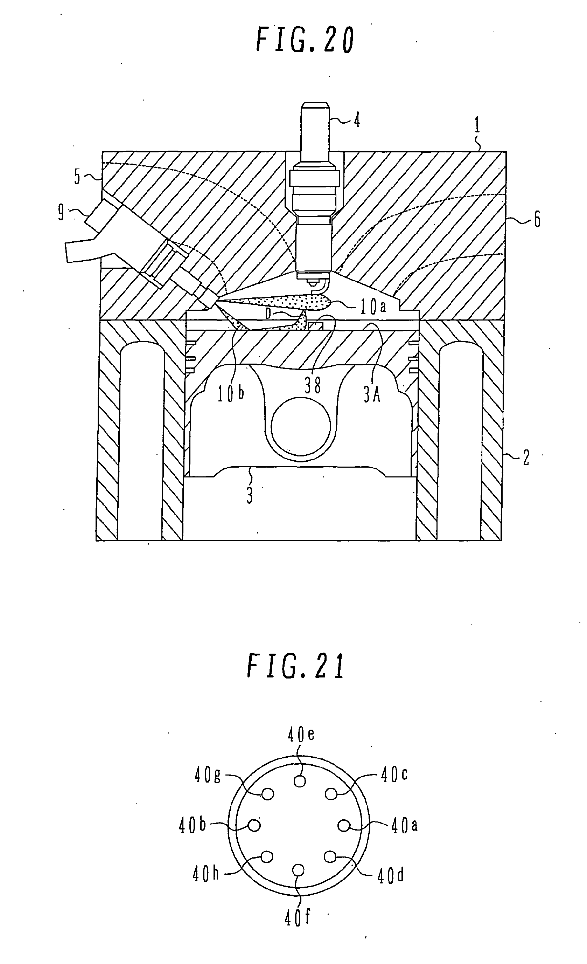

Operations at a cold start of the engine according to the first embodiment will be explained with reference to Fig. 20. Fig. 20 shows a condition in the combustion chamber 2A at a center cross section of the cylinder. With the engine specifications according to the present embodiment, the air volume displacement per cylinder is 400cc and the bore diameter is 80mm. The flow rate of the injector is 500 cc/min under a 7MPa fuel pressure condition. Fuel injection is performed in each of the compression and expansion strokes at a cold start of the engine. A first fuel injection timing is set to 20 degrees BTDC and the ignition timing at 20 degrees ATDC of the expansion stroke. A second injection timing is set at the same timing as the ignition timing. In accordance with the present embodiment, six nozzle holes with the same diameter are provided to perform equal fuel injection from each nozzle hole. The flow rate of the fuel spray 10a, which is a cylinder head side fuel spray, is 83 cc/min.

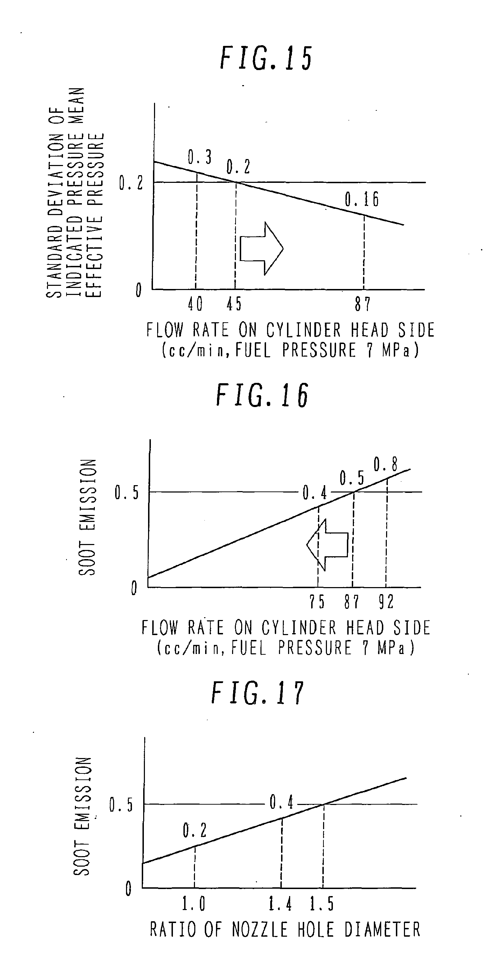

A test result demonstrates that, with an engine having a bore diameter of 80mm, there is a relation between flow rate of the cylinder head side fuel spray and standard deviation of the indicated mean effective pressure (indicating the combustion stability) as shown in Fig. 15. The fuel pressure used in the test is 15MPa. Fig. 15 demonstrates that a greater flow rate of the cylinder head side fuel spray makes it easier to concentrate the air-fuel mixture around the ignition plug resulting in stable ignition without spark failure. Conversely, a smaller flow rate makes it more difficult to form sufficiently dense air-fuel mixture around the ignition plug and therefore ignition cannot be performed. It is desirable to set the standard deviation of the indicated mean pressure to 0.2 or less, which is attained with a flow rate of the cylinder head side fuel spray of 45 cc/min or more. Therefore, by setting the flow rate of the cylinder head side fuel spray oriented toward the ignition plug to 83 cc/min like the present embodiment, an air-fuel mixture having an air-fuel ratio of about 10 suitable for ignition is formed around the ignition plug thereby enabling stable combustion.

Operations under a fully open throttle valve condition according to the first embodiment will be explained below with reference to Fig. 1. With operations under a fully open throttle valve condition, fuel injection is performed during the suction stroke as shown in Fig. 1. Fuel injection during the suction stroke makes it possible to form a homogeneous air-fuel mixture in the combustion chamber 2A to obtain high power. With an engine having a bore diameter of 80m, a test result indicates that there is a relation between flow rate of the cylinder head side fuel spray and soot emission as shown in Fig. 16. The fuel pressure used in the test is 15MPa. Fig. 16 demonstrates that an increase in the fuel injection quantity of the cylinder head side fuel spray increases the amount of fuel sprays adhering to the cylinder head wall surface causing soot at the time of combustion. A permissible value of the soot emission of 0.5 or less can be attained with a flow rate of the fuel spray of 87 cc/min or less. Therefore, combustion with a small amount of soot is possible by setting the flow rate of the cylinder head side fuel spray to 83 cc/min like the present embodiment.

In accordance with the present embodiment, the fuel injection quantity is set so that the ratio of the total of first and second fuel injection quantities to the amount of air inhaled into the combustion chamber 2A (air-fuel ratio) becomes 16.

It is also effective to provide a stepped portion (discharge wall) 3B at a portion on the top surface 3A of the piston 3, which is positioned below the ignition plug 4 as shown in Fig. 20. With this method, under a cold start condition, the air-fuel mixture D of the center fuel spray 10b is raised toward the ignition plug 4 by an air flow formed by the upper fuel spray 10a and the stepped portion 3B, making it easier for the air-fuel mixture D to be deflected toward the ignition plug. As a result, it becomes easier for the air-fuel mixture D to reach the ignition plug 4 in more stable manner even with cycle variations, individual fuel spray variations, and shot variations.

### Second Embodiment

A second embodiment will be explained below. With the specifications according to the second embodiment, the air volume displacement per cylinder is 400cc and the bore diameter is 80mm like the first embodiment. However, a supercharger is provided resulting in an actual air volume displacement of 400cc or more. The flow rate of the injector is 800 cc/min under a 7MPa fuel pressure condition.

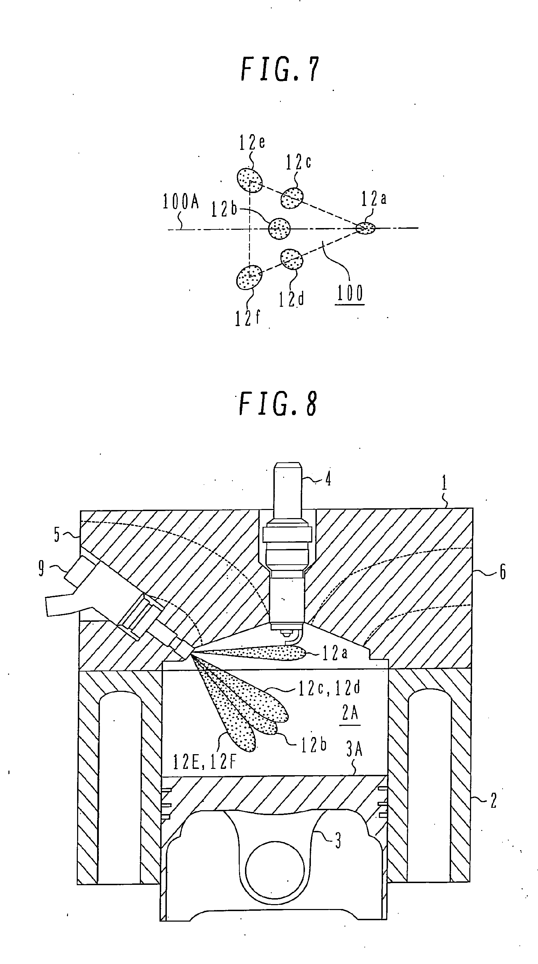

The nozzle in an enlarged manner is shown Fig. 6. Fig. 7 shows the shapes of fuel sprays taken along the AA line at 30mm below the nozzle holes at 1ms after fuel injection under a 11MPa fuel pressure condition. Nozzle holes 13 are circumferentially provided at the end of the injector 9. The shapes of fuel sprays injected from the nozzle holes 13a to 13f of Fig. 6 correspond to fuel sprays 12a to 12f of Fig. 7. The injector 9 is located so that the fuel spray 12a is on the side of the ignition plug 4 as shown in Fig. 8.

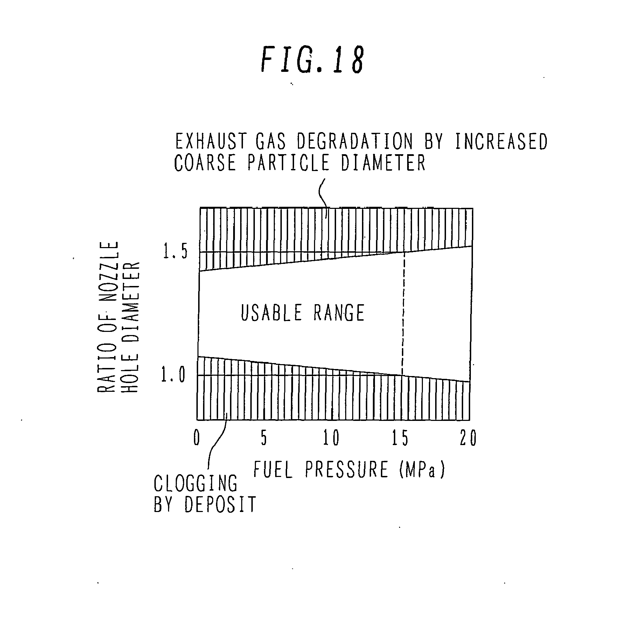

In accordance with the present embodiment, the diameter of the nozzle holes 13b to 13f is 1.4 times that of the nozzle hole 13a. Therefore, the flow rate of the fuel spray 13a, which is a cylinder head side fuel spray, is 74 cc/min. As shown in Fig. 15, under a cold start condition, the flow rate of the cylinder head side fuel spray is set to 45 cc/min or more allowing stable combustion. Further, under a fully open throttle valve condition, the flow rate is set to 92 cc/min or less and therefore much amount of soot is not generated as shown in Fig. 16. However, a test result demonstrates that increasing the nozzle hole diameter too much increases the amount of soot as shown in Fig. 17. The fuel pressure used in the test is 15MPa. The reason is as follows: if the nozzle hole diameter of cylinder block side fuel sprays becomes 1.5 or more times that of the cylinder head side fuel spray, the diameter of particles formed increases resulting in degraded evaporation. In accordance with the present embodiment, the nozzle hole diameter ratio is 1.4 and therefore the soot emission does not exceed the upper-limit value 0.5. Further, under a 15MPa fuel pressure condition, if the nozzle hole diameter ratio is smaller than 1, clogging of fuel by deposit occurs as shown in Fig. 18. In this case, it is necessary to set the nozzle hole diameter ratio to a value between 1 and 1.5, inclusive.

### Third Embodiment

A third embodiment will be explained below. With the specifications according to the third embodiment, the air volume displacement per cylinder is 400cc and the bore diameter is 80mm like the first embodiment. The flow rate of the injector under a 7MPa fuel pressure condition is 650 cc/min.

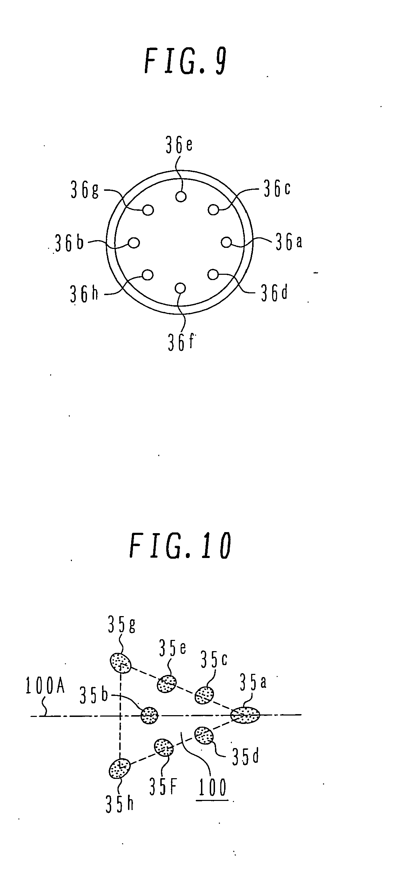

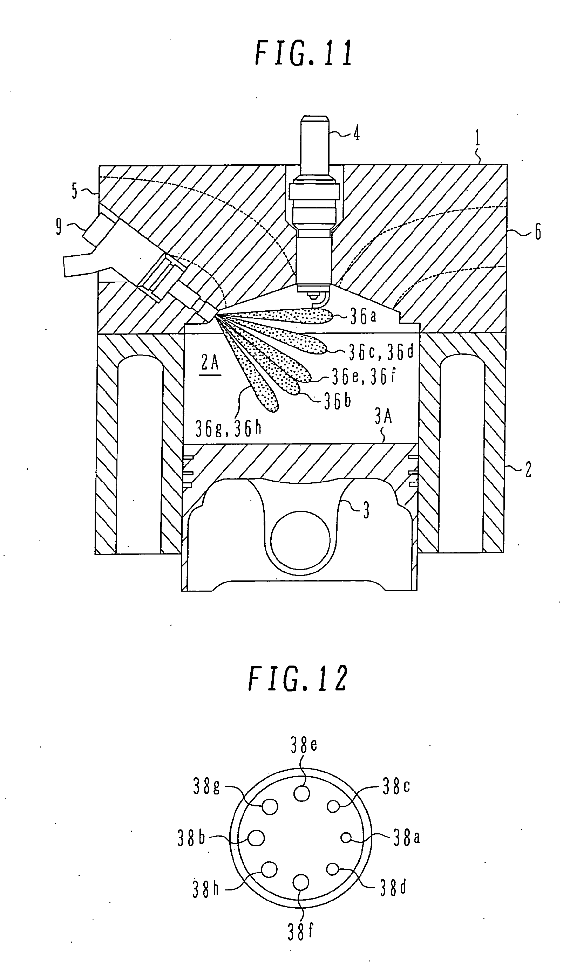

The nozzle in an enlarged manner according to the present embodiment is shown in Fig. 9. Fig. 10 shows the shapes of fuel sprays taken along the AA line at 30mm below the nozzle holes at 1ms after fuel injection under a 11MPa fuel pressure condition. Nozzle holes 36 are circumferentially provided at the end of the injector 9. The shapes of fuel sprays injected from the nozzle holes 36a to 36h of Fig. 9 correspond to the fuel sprays 35a to 35h of Fig. 10. The injector 9 is located so that the fuel spray 36a is on the side of the ignition plug 4 as shown in Fig. 11.

In accordance with the present embodiment, the nozzle holes 36a to 36h have the same diameter to perform equal fuel injection from each nozzle hole. The flow rate of the fuel spray 36a, which is a cylinder head side fuel spray, is 81 cc/min. As shown in Fig. 15, under a cold start condition, the flow rate of the cylinder head side fuel spray is set to 45 cc/min or more allowing stable combustion. Further, under a fully open throttle valve condition, the flow rate is set to 92 cc/min or less and therefore much amount of soot is not generated as shown in Fig. 16.

### Fourth Embodiment

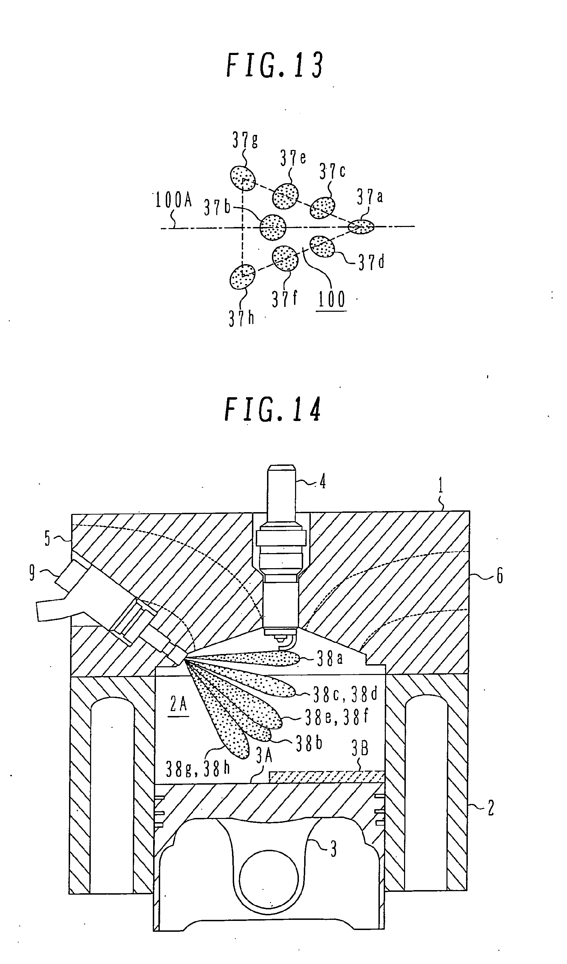

A fourth embodiment will be explained below. With the specifications according to the fourth embodiment, the air volume displacement per cylinder is 400cc and the bore diameter is 80mm like the first embodiment. The flow rate of the injector under a 7MPa fuel pressure condition is 900 cc/min. The nozzle in an enlarged manner is shown Fig. 12. Fig. 13 shows the shapes of fuel sprays taken along the AA line at 30mm below the nozzle holes at 1ms after fuel injection under a 11MPa fuel pressure condition. Nozzle holes 38 are circumferentially provided at the end of the injector 9. The shapes of fuel sprays injected from the nozzle holes 38a to 38f of Fig. 12 correspond to the fuel sprays 37a to 37f of Fig. 13. The injector 9 is located so that the fuel spray 38a is on the side of the ignition plug 4 as shown in Fig. 14.

In accordance with the present embodiment, the diameter of the nozzle holes 38c and 38d is 1.2 times that of the nozzle hole 38a, and the diameter of the nozzle holes 38b and 38e to 38h is 1.5 times that of the nozzle hole 38a. The flow rate of the fuel spray 36a, which is a cylinder head side fuel spray, is 59 cc/min. As shown in Fig. 15, under a cold start condition, the flow rate of the cylinder head side fuel spray is set to 45 cc/min or more allowing stable combustion. Further, under a fully open throttle valve condition, the flow rate is set to 92 cc/min or less and the nozzle hole diameter ratio 1.5 or less and therefore much amount of soot is not generated as shown in Fig. 16.

### Fifth Embodiment

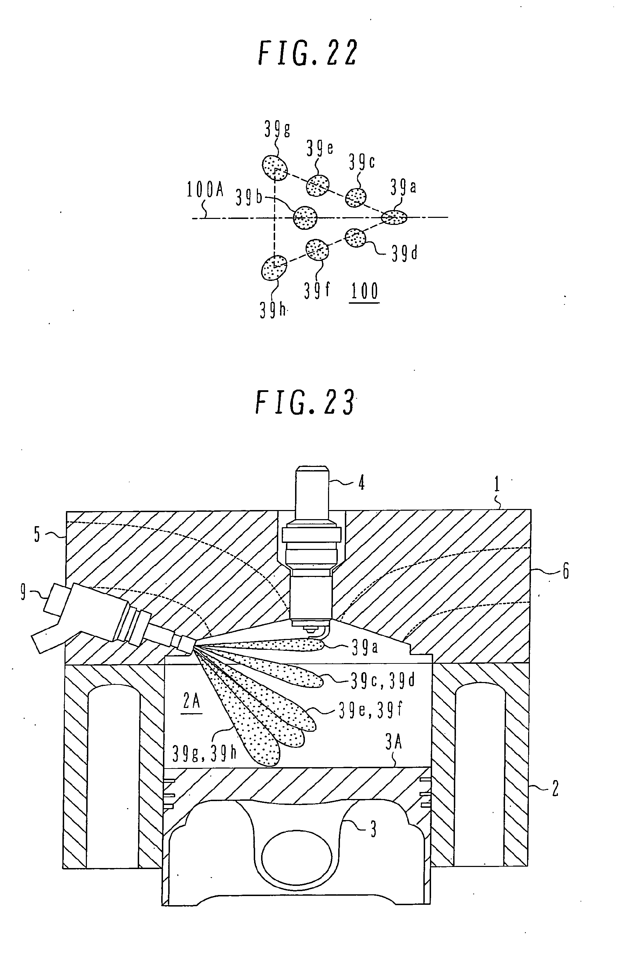

A fifth embodiment will be explained below. With the specifications according to the fifth embodiment, the air volume displacement per cylinder is 500cc and the bore diameter is 92mm. The flow rate of the injector under a 7MPa fuel pressure condition is 900 cc/min. The nozzle in an enlarged manner is shown Fig. 21. Fig. 22 shows the shapes of fuel sprays taken along the AA line at 30mm below the nozzle holes at 1ms after fuel injection under a 11MPa fuel pressure condition. Nozzle holes 40 are circumferentially provided at the end of the injector 9. The shapes of fuel sprays injected from nozzle holes 40a to 40f of Fig. 21 correspond to the fuel sprays 39a to 39f of Fig. 22. The injector 9 is located so that the fuel spray 38a is on the side of the ignition plug 4 as shown in Fig. 14.

In accordance with the present embodiment, the diameter of the nozzle holes 40b to 40h is 1.1 times that of the nozzle hole 40a. The flow rate of the fuel spray 40a, which is a cylinder head side fuel spray, is 95 cc/min. With an increase in the bore diameter, the distance from the injection point to the cylinder head wall surface also increases. Upper- and lower-limit values of the flow rate of the cylinder head side fuel spray corresponding to the standard deviation of indicated mean pressure and the soot emission change in proportion to the bore diameter. In accordance with the present embodiment, the bore diameter is 92mm and therefore the lower-limit value of the flow rate of the cylinder head side fuel spray is calculated from 45 cc/min x 92/80. In order to obtain stable combustion, a flow rate of the cylinder head side fuel spray of 52 cc/min or more is required. Further, the upper-limit value of the flow rate of the cylinder head side fuel spray is calculated from 87 cc/min x 92/80. The soot emission can be set to the lower-limit value by setting the flow rate to 100 cc/min or less.

In accordance with the present embodiment, the flow rate of the cylinder head side fuel spray is 95 cc/min, which is greater than 52 cc/min, allowing stable combustion under a cold start condition. Further, under a fully open throttle valve condition, the flow rate of the cylinder head side fuel spray is set to 100 cc/min or less and the nozzle hole diameter ratio 1.5 or less and therefore much amount of soot is not generated.

As mentioned above, in accordance with the present embodiment, it is possible to ensure the combustion stability under a cold start condition and avoid problem of soot under a fully open throttle valve condition by appropriately setting the cylinder head side fuel spray even with different actual air volume displacements.

Modes shown in the present embodiments are summarized below.

### First Mode

A direct injection internal combustion engine which injects fuel directly into the combustion chamber 2A by means of the injector 9 having a plurality of nozzle holes (11a to 11f according to the embodiment shown in Figs. 2 to 5, 13a to 13f according to the embodiment shown in Figs. 6 and 7, 36a to 36h according to the embodiment shown in Figs. 9 and 10, 38a to 38h according to the embodiment shown in Figs. 12 and 13, or 40a to 40h according to the embodiment shown in Figs. 21 and 22); wherein a first fuel spray (10a, 12a, 37a, or 39a) injected from at least one nozzle hole (11a, 13a, 38a, or 40a) is oriented toward below the ignition plug 4; wherein second fuel sprays (10c to 10f, 12c to 12f, 35c to 35h, 37c to 37h, or 39c to 39h) injected from at least two of the remaining nozzle holes (11c to 11f, 13c to 13f, 36c to 36h, 38c to 38h, or 40c to 40h) are oriented toward both side sections of the piston; and wherein a third fuel spray (10b, 12b, 35b, 37b, or 39b) injected from at least one of the still remaining nozzle holes (11b, 13b, 36b, 38b or 40b) is oriented toward a space defined by the plurality of fuel sprays (10a, 12a, 37a, 39a, 10c to 10f, 12c to 12f, 35c to 35h, 37c to 37h, or 39c to 39h).

### Second Mode

The direct injection internal combustion engine according to the first mode, wherein: the third fuel spray includes at least one fuel spray (10b, 12b, 35b, 37b, or 39b) oriented toward the top surface 3A of the piston.

### Third Mode

The direct injection internal combustion engine according to the first or second mode, wherein: the third fuel spray (11a, or 11a and 11b) is injected into an area (100, shown by dashed lines in Figs. 3, 17, and 21) having a triangular section defined by the first and second fuel sprays.

### Fourth Mode

The direct injection internal combustion engine according to any one of the first to third modes, wherein: guide means 3B for deflecting the third fuel spray (11a, or 11a and 11b) toward the ignition plug 4 is provided.

### Fifth Mode

The direct injection internal combustion engine according any one of the first to fourth modes, wherein: the first fuel spray (10a, or 10a and 10b) controls the air-fuel ratio of the air-fuel mixture around the ignition plug 4 so as to be suitable for ignition; the third fuel spray (11a, or 11a and 11b) has a function to transmit a flame formed at the first fuel spray at an ignition timing into the combustion chamber 2A; and the second fuel sprays (12a to 12d) have a function to form a homogeneous air-fuel mixture in the combustion chamber 2A to form uniform combustion therein.

### Sixth Mode

An injector 9, as shown in Fig. 4, comprising: a plurality of fuel passages (110A, 110B, and 110C to 110F corresponding to the nozzle holes 11c to 11f) having axis lines (11A, 11B, and 11C to 11F corresponding to the nozzle holes 11c to 13f) inclined with respect to an operation axis line 9A of a valve 90 at the end of a nozzle 9B; wherein inclined axis lines (11A, 11E, and 11F) of at least three (110A, 110E, and 110F) of the fuel passages (110A, 110B, and 110C to 110F corresponding to nozzle holes 11c to 11f) have a spreading angle, none of them intersecting with each other; wherein three injection points (10a, 10e, and 10f) are formed in a plane (A-A) perpendicular to the operation axis line 9A of the valve 90 to form a triangle; and wherein at least one center-oriented fuel passage 110B having an injection point 10b around the center of the triangle is provided.

### Seventh Mode

The injector according to the sixth mode, wherein: the center-oriented fuel passage 110B has an injection point 10b around the center of the triangle on an axis line 100A which bisects an apex angle (θ) of the triangle.

### Eighth Mode

The injector according to the sixth mode, wherein: the diameter of the fuel passage or nozzle hole having an injection point at the apex angle of the triangle is smaller than the diameter of the other fuel passages or nozzle holes, as shown in Figs. 6 and 12.

### Ninth Mode

The injector according to any one of the sixth to eighth modes, wherein: the fuel injection nozzle holes (nozzle holes 11a to 11f) of the plurality of fuel passages (110A to 110F) provided on the nozzle 9B are circumferentially arranged at equal intervals.

### Tenth Mode

The injector according to any one of the sixth to ninth modes, wherein: the fuel injection quantity of fuel sprays oriented toward the apex of the triangle is set to 20% or less (optimally 14 to 17%) of the total fuel injection quantity.

### Eleventh Mode

A direct injection internal combustion engine, comprising: an injector 9 having a plurality of nozzle holes (11a to 11f according to the embodiment shown in Figs. 2 to 5, 13a to 13f according to the embodiment shown in Figs. 6 and 7, 36a to 36h according to the embodiment shown in Figs. 9 and 10, 38a to 38h according to the embodiment shown in Figs. 12 and 13, or 40a to 40h according to the embodiment shown in Figs. 21 and 22) on the suction side in the combustion chamber 2A; an upper fuel spray (10a, 12a, 37a, or 39a) out of the fuel sprays (10a to 10f in Fig. 3, 12a to 12f in Fig. 7, 37a to 37f in Fig. 13, and 39a to 39f in Fig. 22) injected from a plurality of nozzle holes, oriented from the injector 9 toward below the ignition plug 4, to form an air flow from the injector 9 toward below the ignition plug 4; a center fuel spray (10b, 12b, 35b, 37b, or 39b) oriented toward the side of the piston 3 from the upper fuel spray (10a, 12a, 37a, or 39a) and almost immediately below the upper fuel spray (10a, 12a, 37a, or 39a) and guided or transferred to the ignition plug 4 by the air flow at a cold start of the engine; and side fuel sprays (10c to 10f in Fig. 3, 12c to 12f in Fig. 7, 37c to 37f in Fig. 13, or 39c to 39f in Fig. 22) oriented toward both side sections of the piston 3 around the center fuel spray (10b, 12b, 35b, 37b, or 39b).

### Twelfth Mode

The direct injection internal combustion engine according to the eleventh mode, wherein: the upper fuel spray (10a, 12a, 37a, or 39a) is composed of one fuel spray injected from one nozzle hole (11a, 13a, 38a, or 40a).

### Thirteenth Mode

The direct injection internal combustion engine according to the eleventh mode, wherein: the fuel injection quantity of the upper fuel spray (10a, 12a, 37a, or 39a) is 20% or less of the total fuel injection quantity.

### Fourteenth Mode

The direct injection internal combustion engine according to the eleventh mode, wherein: the piston 3 is provided with a stepped portion 3B as shown in Fig. 14 on the top surface 3A thereof positioned below the ignition plug 4, the stepped portion being formed such that the suction side of the piston top surface be lowered and the exhaust side thereof be raised.

### Fifteenth Mode

The direct injection internal combustion engine according to the eleventh mode, wherein: the piston 3 is provided with a convex-shaped section 3B as shown in Fig. 20 on the top surface 3A thereof positioned below the ignition plug 4.

### Sixteenth Mode

The direct injection internal combustion engine according to the eleventh mode, wherein: the upper fuel spray (10a, 12a, 37a, or 39a) is composed of a fuel spray which does not hit the cylinder head 1.

### Seventeenth Mode

The fuel injection timing is set to 30 degrees before the compression T.D.C. or later at a cold start of the engine and controlled so as to be around 90 degrees after the suction T.D.C. after the engine has warmed up.

In accordance with the above-mentioned embodiments, by transferring the air-fuel mixture of the center fuel spray to the ignition plug and igniting it by means of an air flow formed by the upper fuel spray under a cold start condition, ignition retarding becomes possible at a cold start of the engine allowing exhaust gas temperature rise. Further, since the fuel to be oriented toward below the ignition plug can be reduced, power reduction by fuel adhesion to the cylinder wall surface under a fully open throttle valve condition can be prevented. This allows exhaust gas reduction and early activation of catalyst by exhaust gas temperature rise under a cold start condition, as well as high power operation under a fully open throttle valve condition.

In particular, one or a plurality of appropriate quantities of fuel sprays (around 15% to 30%) oriented toward the center of the triangle are transferred in the vicinity of the ignition plug according to the ignition timing. At the same time, the side fuel sprays maintain an appropriate air-fuel ratio in the entire volume of the combustion chamber 2A, and an appropriate quantity of the upper fuel spray (10 to 20% of the total fuel injection quantity) forms an ignitable air-fuel mixture around the ignition plug, thus allowing the combustion in the entire volume of the combustion chamber 2A to be controlled toward an optimal combustion state over a wide operation range of the engine.

Further, in accordance with thus-configured present embodiments, it becomes possible to control at least one of the fuel injection quantity, penetration, the fuel injection angle, and the number of nozzle holes of the first, second, and third fuel sprays according to the mounted engine, making it easier to realize a combustion state suitable for each individual engine.

The present invention is preferably applied to a direct injection internal combustion engine which injects fuel directly into the combustion chamber by use of an injector having a plurality of nozzle holes, so-called a multi-hole type injector.

The fuel injection quantity from each nozzle hole, penetration, the injection angle, or the number of nozzle holes is suitably set according to each individual engine applied.
The above features and embodiments can be combined in any way partly or as a whole.

## Claims

1. A direct injection internal combustion engine which injects fuel directly into the combustion chamber by use of an injector having a plurality of nozzle holes,
wherein a first fuel spray injected from at least one of the nozzle holes is oriented toward an ignition plug;
wherein second fuel sprays injected from at least two of the remaining nozzle holes are oriented toward both side sections of the piston; and
wherein a third fuel spray injected from at least one of the still remaining nozzle holes is oriented toward a space defined by the plurality of fuel sprays.

2. An injector used for the direct injection internal combustion engine according to Claim 1,
wherein a fuel passage for leading fuel to each of fuel nozzle holes forming the first, second, and third fuel sprays has at least two different diameters; and
wherein a maximum diameter of the different fuel passage diameters is up to 1.5 times a minimum diameter thereof.

3. An injector used for the direct injection internal combustion engine according to Claim 1 or 2, the injector comprising a plurality of fuel passages having an axis line inclined with respect to a valve operation axis line at a nozzle end;
wherein inclined axis lines of at least three of said fuel passages have a spreading angle, none of them intersecting with each other, and three injection points are formed in a plane perpendicular to a valve operation axis line to form a triangle; and
wherein at least one center-oriented fuel passage having an injection point around the center of the triangle is provided.

4. The injector used for a direct injection internal combustion engine according to Claim 3,
wherein said plurality of fuel passages have at least two different diameters; and
wherein a maximum diameter of the different fuel passage diameters is up to 1.5 times a minimum diameter thereof.

5. The injector used for a direct injection internal combustion engine according to Claim 3 or 4, wherein:
the center-oriented fuel passage has an injection point on an axis line which bisects an apex angle of the triangle.

6. The injector used for a direct injection internal combustion engine, according to any one of Claims 3 to 5, wherein:
fuel injection nozzle holes of said plurality of fuel passages provided on the nozzle are circumferentially arranged at equal intervals.

7. The injector used for a direct injection internal combustion engine, according to any one of Claims 3 to 6, wherein:
the fuel injection quantity of fuel sprays oriented toward the apex of the triangle is set to 10 to 20% of the total fuel injection quantity.

8. The direct injection internal combustion engine according to Claim 1, wherein:
the third fuel spray includes at least one fuel spray oriented toward a top surface of the piston.

9. The direct injection internal combustion engine according to Claim 1 or 8, wherein:
the third fuel spray is injected into an area having a triangular section defined by the first and second fuel sprays.

10. The direct injection internal combustion engine according to any one of Claims 1, 8, and 9, wherein:
guide means for deflecting the third fuel spray toward the ignition plug is provided.

11. The direct injection internal combustion engine according to any one of Claims 1 and 8 to 10, wherein:
the first fuel spray controls the air-fuel ratio of the air-fuel mixture around the ignition plug so as to be suitable for ignition;
the third fuel spray has a function to transmit a flame formed at the first fuel spray at an ignition timing into the combustion chamber; and
the second fuel spray has a function to form a homogeneous air-fuel mixture in the combustion chamber to form uniform combustion therein.

12. A control unit for the direct injection internal combustion engine according to any one of Claims 1 and 8 to 11, wherein:
the fuel injection timing is set to 30 degrees before the compression T.D.C. or later at a cold start of the engine and controlled so as to be around 90 degrees after the suction T.D.C. after the engine has warmed up.

13. An injector provided on a side surface of the combustion chamber of a direct injection internal combustion engine, the injector injecting fuel sprays comprising:
one or a plurality of upper fuel sprays injected toward below the ignition plug provided on the cylinder head; and
a plurality of lower fuel sprays injected toward the periphery surface of the combustion chamber or the top surface of the piston;
wherein, when fuel injection is performed with a constant fuel pressure at a constant fuel injection timing,
the fuel injection quantity of said upper fuel spray is constant regardless of the actual air volume displacement of the engine, and
the fuel injection quantity of said lower fuel spray is proportional to the actual air volume displacement of the engine.

14. A direct injection internal combustion engine using the injector according to Claim 13, wherein:
the fuel injection start timing during the compression stroke is between 70 degrees B.T.D.C. and the T.D.C.

15. The injector used for a direct injection internal combustion engine, according to Claim 13,
wherein, when the fuel injection quantity of said lower fuel spray changes in proportion to the actual air volume displacement,
said lower fuel spray is injected from the same number of nozzle holes with different diameters.

16. The injector used for a direct injection internal combustion engine, according to Claim 13,
wherein, when the fuel injection quantity of said lower fuel spray changes in proportion to the actual air volume displacement,
said lower fuel spray is injected from a different number of nozzle holes with substantially the same diameter.

17. The injector used for a direct injection internal combustion engine, according to Claim 13,
wherein, when the fuel injection quantity of said lower fuel spray changes in proportion to the actual air volume displacement,
said lower fuel spray is injected from a different number of nozzle holes with different diameters, and a maximum diameter of the nozzle holes is up to 1.5 times a minimum diameter thereof.

18. An injector used for a direct injection internal combustion engine provided on a side surface of the combustion chamber thereof, the injector injecting fuel sprays comprising:
one or a plurality of upper fuel sprays injected toward below the ignition plug provided on the cylinder head; and
a plurality of lower fuel sprays injected toward the periphery surface of the combustion chamber or the top surface of the piston;
wherein, when the flow rate per unit time is measured under a 7MPa fuel pressure condition, the fuel flow rate of the cylinder head side fuel spray is between a lower-limit value of 45 cc/min and an upper-limit value of 87 cc/min when the bore diameter of the engine is 80mm.

19. The injector used for a direct injection internal combustion engine, according to Claim 18, wherein:
the lower-limit value of the fuel flow rate of said lower fuel spray equals 45 cc/min x bore diameter/80, and the upper-limit value equals 87 cc/min x bore diameter/80.

20. An injector used for a direct injection internal combustion engine provided on a side surface of the combustion chamber thereof, the injector injecting fuel sprays comprising:
one or a plurality of upper fuel sprays injected toward below the ignition plug provided on the cylinder head; and
a plurality of lower fuel sprays injected toward the periphery surface of the combustion chamber or the top surface of the piston;
wherein the injector is used with a fuel pressure of 15Mpa; and
wherein a plurality of nozzle holes with different diameters are provided, and a maximum diameter of the nozzle holes is up to 1.5 times a minimum diameter thereof.
